# EUROPEAN PATENT APPLICATION

(11) **EP 2 413 655 A1**
(43) Date of publication of application: **01.02.2012**
(21) Application number: 10756095.5
(22) Date of filing: 24.03.2010
(51) Int. Cl.: H04W 72/04, H04J 1/00, H04J 3/00

(54) **RADIO BASE STATION AND MOBILE COMMUNICATION METHOD**

(30) Priority: 25.03.2009 JP 2009075222
(71) Applicant: NTT DOCOMO, INC., Chiyoda-ku Tokyo 100-6150 (JP)
(72) Inventor: KIYOSHIMA, Kohei, Tokyo 100-6150 (JP); ISHII, Hiroyuki, Tokyo 100-6150 (JP); OKUBO, Naoto, Tokyo 100-6150 (JP)
(74) Representative: HOFFMANN EITLE
(86) International application number: PCT/JP2010/055054
(87) International publication number: WO 2010/110299

(57) **Abstract**

A radio base station according to the present invention comprising: a radio base station, comprising a resource assignment unit configured to assign a time direction resource, a frequency direction resource, and a code direction resource, as a physical signal transmission resource for transmitting a predetermined physical signal, to each mobile station, the frequency direction resource is configured to be specified by a frequency region and a frequency position within the frequency region when frequency bandwidths used in a plurality of physical signals transmitted by each mobile station are the same, the resource assignment unit is configured to assign the code direction resource after assigning the time direction resource and the frequency direction resource, as the physical signal transmission resource, to each mobile station

## Description

### TECHNICAL FIELD

The present invention relates to a radio base station and a mobile communication method.

### BACKGROUND ART

In a mobile communication system of an LTE (Long Term Evolution) scheme defined in 3GPP, each mobile station UE is configured to transmit "Sounding RS (Sounding Reference Signal, hereinafter, "SRS")", which is one type of a physical signal, to a radio base station eNB.

### SUMMARY OF THE INVENTION

### PROBLEMS TO BE SOLVED BY THE INVENTION

However, since a method of assigning an SRS transmission resource to each mobile station UE is not defined in 3GPP, there is a problem that the SRS transmission resource may not be appropriately assigned in the above-mentioned mobile communication system.

Therefore, the present invention is intended to overcome the above-described problem. An object of the present invention is to provide a radio base station capable of appropriately assigning an SRS transmission resource and a mobile communication method therefor.

### MEANS FOR SOLVING THE PROBLEM

The first feature of the present invention is summarized in that a radio base station, comprising a resource assignment unit configured to assign a time direction resource, a frequency direction resource, and a code direction resource, as a physical signal transmission resource for transmitting a predetermined physical signal, to each mobile station, the frequency direction resource is configured to be specified by a frequency region and a frequency position within the frequency region.

The second feature of the present invention is summarized in that a mobile communication method comprising a step of assigning a time direction resource, a frequency direction resource, and a code direction resource, as a physical signal transmission resource for transmitting a predetermined physical signal, to each mobile station, the frequency direction resource is specified by a frequency region and a frequency position within the frequency region.

### EFFECT OF THE INVENTION

As described above, according to the present invention, it is possible to provide a radio base station capable of appropriately assigning an SRS transmission resource and a mobile communication method therefor.

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a functional block diagram of a radio base station according to the first embodiment of the present invention.
[Fig. 3] Fig. 3 is a diagram explaining one example of SRS assigned by the radio base station according to the first embodiment of the present invention.
[Fig. 4] Fig. 4 is a diagram explaining one example of a time direction resource that can be assigned as an SRS transmission resource by the radio base station according to the first embodiment of the present invention.
[Fig. 5] Fig. 5 is a diagram explaining one example of a frequency direction resource that can be assigned as an SRS transmission resource by the radio base station according to the first embodiment of the present invention.
[Fig. 6] Fig. 6 is a diagram explaining one example of a frequency direction resource that can be assigned as an SRS transmission resource by the radio base station according to the first embodiment of the present invention.
[Fig. 7] Fig. 7 is a diagram explaining one example of a time direction resource and a frequency direction resource that can be assigned as an SRS transmission resource by the radio base station according to the first embodiment of the present invention.
[Fig. 8] Fig. 8 is a diagram explaining one example of a code direction resource that can be assigned as an SRS transmission resource by the radio base station according to the first embodiment of the present invention.
[Fig. 9] Fig. 9 is a diagram explaining one example of a code direction resource that can be assigned as an SRS transmission resource by the radio base station according to the first embodiment of the present invention.
[Fig. 10] Fig. 10 is a diagram explaining a method in which the radio base station according to the first embodiment of the present invention assigns an SRS transmission resource.
[Fig. 11] Fig. 11 is a diagram explaining a method in which the radio base station according to the first embodiment of the present invention assigns an SRS transmission resource.
[Fig. 12] Fig. 12 is a diagram explaining a method in which the radio base station according to the first embodiment of the present invention assigns an SRS transmission resource.
[Fig. 13] Fig. 13 is a diagram explaining a method in which the radio base station according to the first embodiment of the present invention assigns an SRS transmission resource.
[Fig. 14] Fig. 14 is a flowchart illustrating a method in which the radio base station according to the first embodiment of the present invention assigns an SRS transmission resource.

### BEST MODES FOR CARRYING OUT THE INVENTION

### (Configuration of mobile communication system according to first embodiment of the present invention)

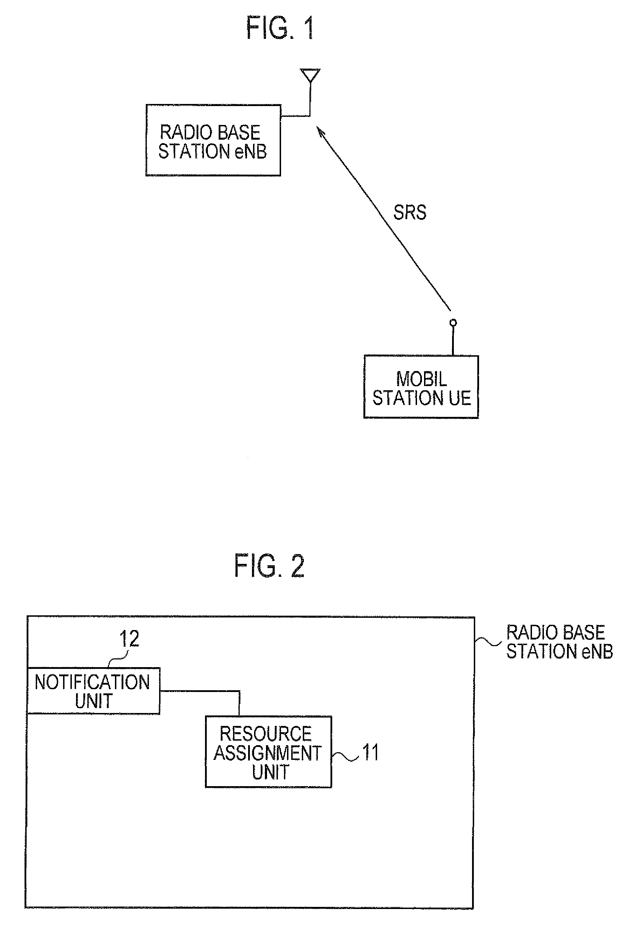

With reference to Fig. 1 to Fig. 12, the configuration of a mobile communication system according to a first embodiment of the present invention will be explained.

The mobile communication system according to this embodiment is a mobile communication system of an LTE scheme, and in the mobile communication system according to this embodiment, a mobile station UE is configured to transmit "SRS", which is one type of a physical signal, to a radio base station eNB, as illustrated in Fig. 1.

Further, in the mobile communication system according to this embodiment, the mobile station UE is configured to transmit CQI (Channel Quality Indicator) indicating a reception quality that should be used for notifying a reception quality in the downlink, ACK/NACK (hereinafter, "A/N") for the downlink data, Scheduling Request (SR), etc., to the radio base station eNB via PUCCH (Physical Uplink Control Channel).

As illustrated in Fig. 2, the radio base station eNB includes a resource assignment unit 11 and a notification unit 12.

The resource assignment unit 11 is configured to assign a predetermined physical channel resource and physical signal transmission resource in each cell subordinate to the radio base station eNB.

In this case, the physical channel is for transmitting information from an upper layer, and the physical signal is not for transmitting the information from the upper layer but for transmitting the information generated by the physical layer.

For example, the resource assignment unit 11 is configured to assign a PUCCH resource, a PUSCH (Physical Uplink Shared Channel) resource, etc., as an uplink physical channel resource, in each cell subordinate to the radio base station eNB.

Further, the resource assignment unit 11 is configured to assign a PDCCH (Physical Downlink Control Channel) resource, a PDSCH (Physical Downlink Shared Channel) resource, etc., as a downlink physical channel resource, in each cell subordinate to the radio base station eNB.

Here, the resource assignment unit 11 is configured to assign a CQI transmission resource, an A/N transmission resource, or an SRS transmission resource, from the PUCCH resources.

Further, the resource assignment unit 11 is configured to assign an SRS transmission resource, DRS transmission resource for transmitting Demodulation RS (hereinafter, "DRS"), etc., as the physical signal transmission resource for transmitting a predetermined physical signal.

A specific example of the operation in which the resource assignment unit 11 assigns a resource will be explained later.

The notification unit 12 is configured to notify a resource assigned by the resource assignment unit 11 in each cell subordinate to the radio base station eNB.

Specifically, the notification unit 12 is configured to notify each mobile station UE of the CQI transmission resource, the A/N transmission resource, the SR transmission resource, or the SRS transmission resource through an RRC message.

The specific example of the operation in which the resource assignment unit 11 assigns a resource will be explained, below.

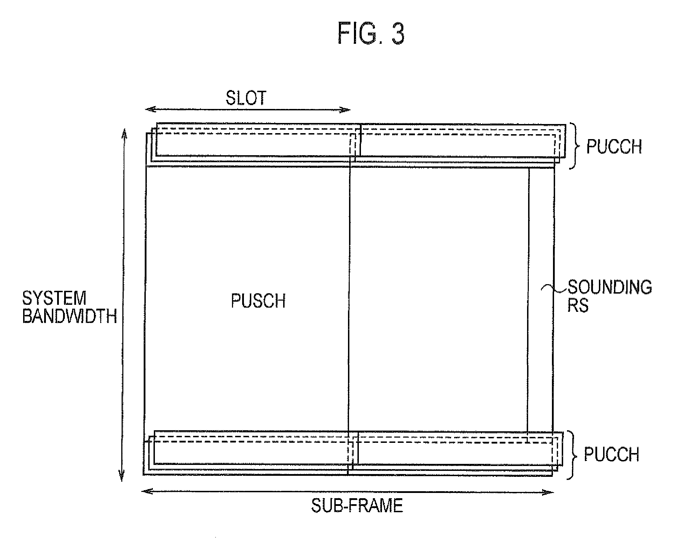

As illustrated in Fig. 3, in order from resource blocks at both ends of a system frequency bandwidth, the resource assignment unit 11 is configured to assign a resource block as a PUCCH resource block, and to assign a resource block inside a resource block assigned as the PUCCH resource block , as a PUSCH resource block.

Here, each resource block (hereinafter, referred to as "RB") is configured by 7 OFDM symbols and 12 sub-carriers.

Further, the resource assignment unit 11 is configured to assign an OFDM symbol located at the rearmost of each sub-frame, as the SRS transmission resource. That is, the resource assignment unit 11 is configured to multiplex the SRS on the OFDM symbol located at the rearmost of each sub-frame.

It is noted that as illustrated in Fig. 3, it is configured that in each PUCCH RB , code multiplexing is performed. Thus, the resource assignment unit 11 is configured to assign a time direction resource, a frequency direction resource, and a code direction resource, as the PUCCH resource.

Further, the resource assignment unit 11 is configured to assign the PUCCH resource between a first half portion (slot) within a single sub-frame and a second half (slot) thereof, by way of "Intra-subframe frequency hopping".

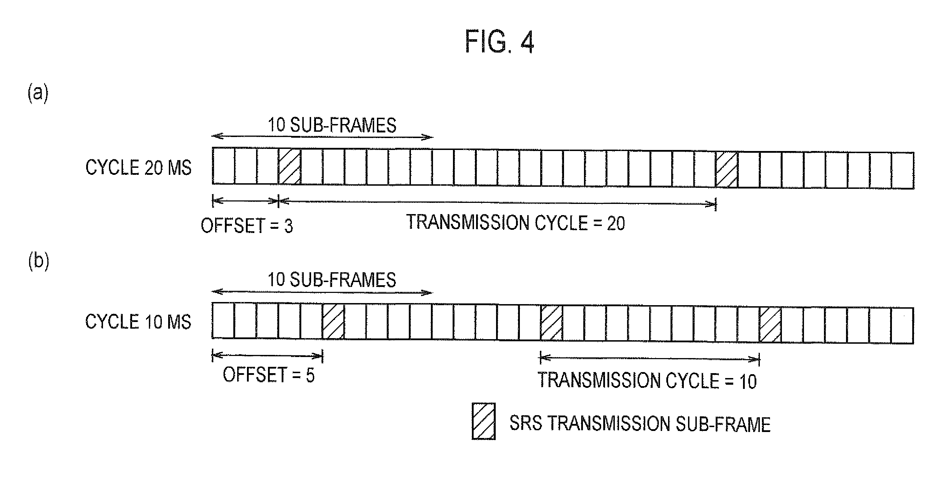

As illustrated in Fig. 4, the resource assignment unit 11 may be configured to determine a sub-frame by which SRS is transmitted, as the time direction resource assigned to each mobile station UE as the SRS transmission resource.

For example, as illustrated in Fig. 4, the sub-frame for transmitting the SRS is determined by offset from a transmission cycle of the SRS and a head of a radio frame. It is noted that one radio frame is formed by 10 sub-frames.

In an example of Fig. 4(a), the transmission cycle of the SRS is "20 ms" and the offset from the head of the radio frame is "3", and thus, the resource management unit 11 regards a sub-frame #4, which is placed next thereto, of the radio frame as the time direction resource (SRS transmission sub-frame) assigned as the SRS transmission resource.

In an example of Fig. 4(b), the transmission cycle of the SRS is "10 ms" and the offset from the head of the radio frame is "5", and thus, the resource management unit 11 regards a sub-frame #6 of each radio frame as the time direction resource (SRS transmission sub-frame) assigned as the SRS transmission resource.

The resource assignment unit 11 is configured to determine the frequency direction resource assigned to each mobile station UE as the SRS transmission resource.

For example, the resource assignment unit 11 is configured to assign a frequency band (Frequency Domain Position) by which the SRS is transmitted, as the frequency direction resource. Specifically, the resource assignment unit 11 is configured to assign "SRS RBG (Resource Block Group)" that specifies a frequency band by which the SRS is transmitted, as the frequency direction resource.

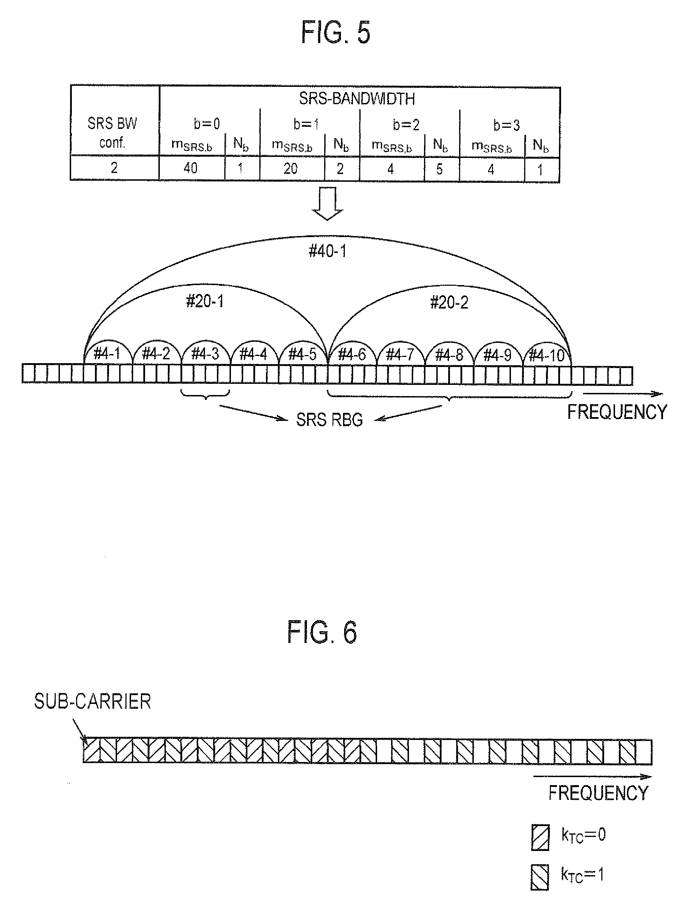

For example, as illustrated in Fig. 5, the resource assignment unit 11 is configured to assign SRS RBG#40-1 that specifies a frequency band corresponding to 40RB, SRS RBG#20-1 and SRS RBG#20-2 that specify a frequency band corresponding to 20RB, SRS RBG#4-1 to SRS RBG#4-10 that specify a frequency band corresponding to 4RB, etc., as the frequency direction resource.

Further, the resource assignment unit 11 is configured to assign a frequency within a frequency band by which the SRS is transmitted, as the frequency direction resource.

As illustrated in Fig. 6, the resource assignment unit 11 is configured to multiplex the two SRSs within each frequency band, by "Transmission Comb (TC)".

The TC is a technology of alternately multiplexing the two SRSs in a frequency (sub-carrier) within each frequency band, as illustrated in Fig. 6. In this case, the configuration within each frequency band is such that SRS to which "k_{TC}=0" is assigned and SRS to which "k_{TC}=1" is assigned are multiplexed in this order.

That is, the resource assignment unit 11 is configured to assign to each mobile station UE a frequency region specified by SRS RBG and a frequency position within a frequency region specified by k_{TC} in the TC, as the frequency direction resource.

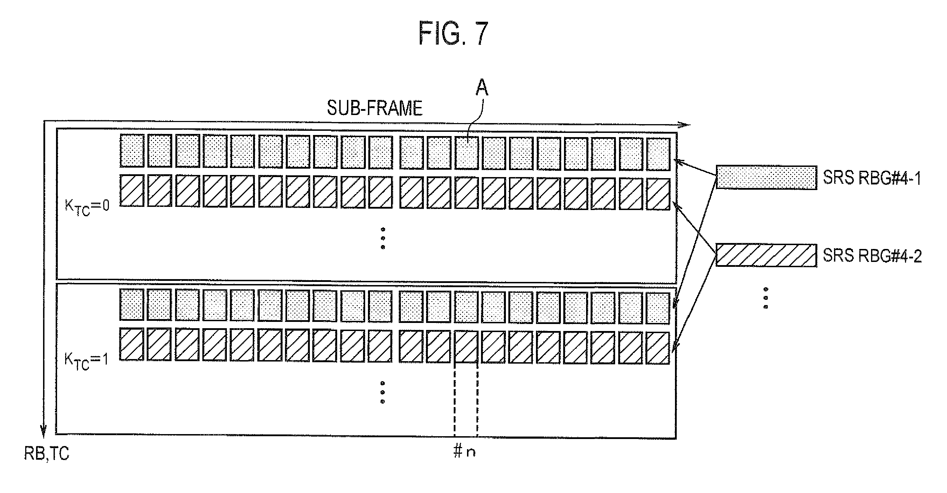

Fig. 7 illustrates the time direction resource and the frequency direction resource that can be assigned as the SRS transmission resource.

For example, in Fig. 7, the resource assignment unit 11 may be configured to assign a resource A specified by a sub-frame #n (time direction resource), SRS RBG#4-1 (frequency direction resource), and "k_{TC}=0 (frequency direction resource)", as the SRS transmission resource, to the mobile station UE#1.

Further, when frequency bandwidths used by a plurality of SRSs transmitted by each mobile station UE are the same, the resource assignment unit 11 may be configured to assign the code direction resource (CS) after assigning the time direction resource and the frequency direction resource, as the SRS transmission resource, to each mobile station UE.

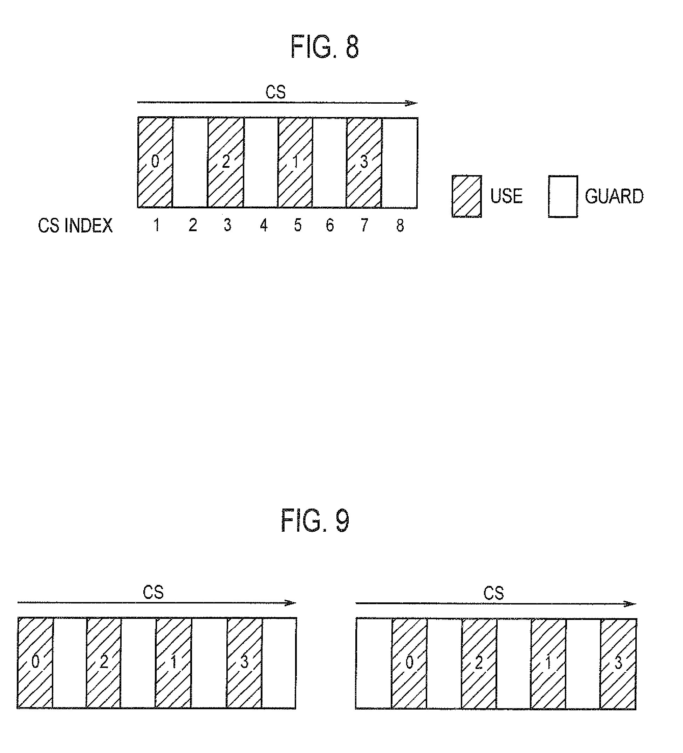

Specifically, as illustrated in Fig. 8, the code direction resource that can be assigned as the SRS transmission resource is multiplexed by a plurality (for example, eight) of Cyclic Sequences (hereinafter, "CSs") that are in a "Cyclic Shift" relationship and are orthogonal to one another, within a resource specified by a combination of a time direction resource and a frequency direction resource assigned to each mobile station UE.

As illustrated in Fig. 8, a CS index is imparted to the code direction resource (CS) that can be assigned as the SRS transmission resource in such a single sub-frame.

That is, the configuration is such that the resource assignment unit 11 determines the frequency direction resource (combination of SRS RBG and "k_{TC}") and the code direction resource (CS), within each sub-frame, assigned as the SRS transmission resource, the notification unit 12 notifies each mobile station UE of the determined resource, and each mobile station UE transmits the SRS by using the notified SRS transmission resource.

Thus, the resource assignment unit 11 finally determines the code direction resource (CS) assigned as the SRS transmission resource after determining the time direction resource (sub-frame) and the frequency direction resource (combination of SRS RBG and "k_{TC}") assigned as the SRS transmission resource, and thereby, the assignment of the SRS transmission resource within the same frequency direction resource (SRS RBG and "k_{TC}") can be decreased and an increase in interference can be contained to a minimum level.

Specifically, the resource assignment unit 11 may be configured to determine the frequency direction resource (SRS RBG and "k_{TC}") assigned as the SRS transmission resource, based on a usage situation of the code direction resource (CS) in each frequency direction resource (combination of SRS RBG and "k_{TC}").

For example, the resource assignment unit 11 may be configured to assign as the SRS transmission resource, in order from a frequency direction resource (combination of SRS RBG and "k_{TC}") having a smaller number of the code direction resources (CSs) in use, within each time direction resource (sub-frame).

Further, the resource assignment unit 11 may be configured to assign as the SRS transmission resource, in order from a frequency direction resource (combination of SRS RBG and "k_{TC}") having a larger number of available code direction resources (CSs), within each time direction resource (sub-frame).

Moreover, the resource assignment unit 11 may be configured to assign as the SRS transmission resource, in order from a frequency direction resource (combination of SRS RBG and "k_{TC}") having a smaller usage rate of the code direction resources (CSs), within each time direction resource (sub-frame).

In this case, the usage rate of the code direction resource (CS) is a ratio of the number of the code direction resources (CSs) in use, to the number of code direction resources (CSs) for SRS transmission in each frequency direction resource (combination of SRS RBG and "k_{TC}").

In this case, the resource assignment unit 11 may be configured to monitor a period elapsed from a release of the code direction resource (CS) within each frequency direction resource (combination of SRS RBG and "k_{TC}") with the timer, and to use the code direction resource (CS) that has elapsed a constant period after the release within each frequency direction resource (combination of SRS RBG and "k_{TC}") as the usable code direction resource (CS).

For example, the resource assignment unit 11 may be configured to assign an index to the frequency direction resource (combination of SRS RBG and "k_{TC}") that can be assigned as the SRS transmission resource, in order from in the time direction to in the frequency direction.

Then, in the above description, the resource assignment unit 11 is configured to assign as the SRS transmission resource in order from a frequency direction resource (combination of SRS RBG and "k_{TC}") having a smaller number of the code direction resources (CSs) in use (or a larger number of the usable code direction resources (CSs), or a smaller usage rate of the code direction resource (CS)) within each time direction resource (sub-frame). In addition to this configuration, if the number of the code direction resources (CSs) in use (or the number of usable code direction resources, or the usage rate of the code direction resource (CS)) is the same in a plurality of frequency direction resources (combination of SRS RBG and "k_{TC}"), then the resource assignment unit 11 may also be configured to assign, as the SRS transmission resource, the frequency direction resource (combination of SRS RBG and "k_{TC}") having the smallest index.

It is noted that as illustrated in Fig. 8, between the code direction resources (CSs) that can be assigned as the SRS transmission resource, a code direction resource (CS) for guarding may be arranged to avoid the interference.

That is, the resource assignment unit 11 may be configured to intermittently assign the code direction resource (CS) in each frequency direction resource (SRS RBG and "k_{TC}").

For example, as illustrated in Fig. 8, the resource assignment unit 11 is configured to assign in a thinning-out manner in which the code direction resources (CSs) assigned as the SRS transmission resource are kept as far apart as possible, in each frequency direction resource (combination of SRS RBG and "k_{TC}").

Specifically, as illustrated in Fig. 8, the resource assignment unit 11 is configured to assign the code direction resource (CS) assigned as the SRS transmission resource in a round-robin manner in order from CS#1 to CS#3 to CS#2 to CS#4, i.e., so that the code direction resources (CSs) are kept as far apart as possible.

Further, as illustrated in Fig. 9, the resource assignment unit 11 may be configured to deviate the assignment position of the code direction resource (CS) with which a specific index is imparted from an assignment position of the code direction resource (CS) with which the specific index in another cell is imparted.

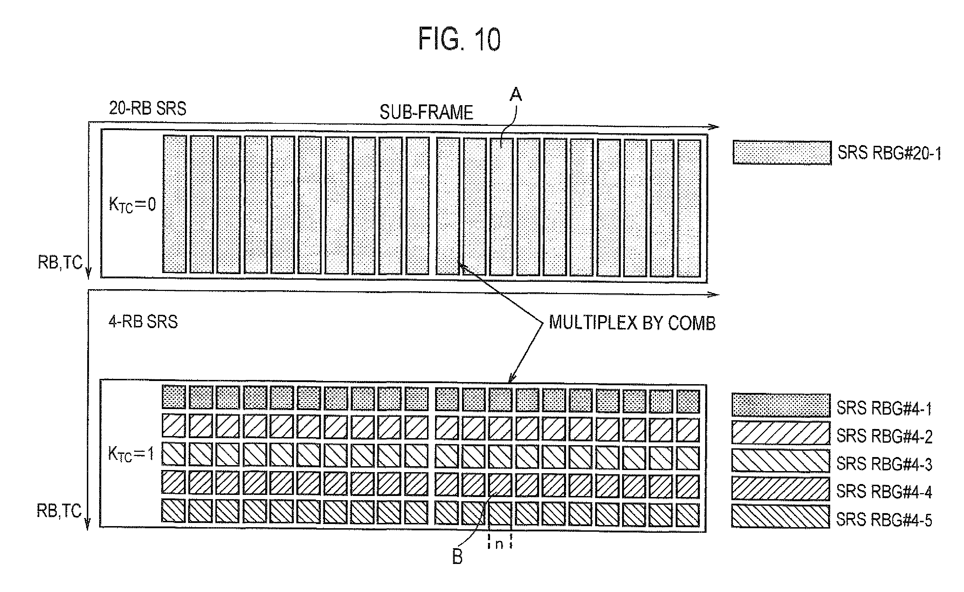

Further, as illustrated in Fig. 10, when frequency bandwidths used in a plurality of SRSs transmitted by each mobile station UE are different (for example, frequency bandwidths corresponding to 20 RB and 4 RB), i.e., when frequency direction resources of different frequency bandwidths are multiplexed as the frequency direction resource that can be assigned as the SRS transmission resource, the resource assignment unit 11 cannot assign the code direction resource (CS), as the SRS transmission resource, to each mobile station UE.

For example, in Fig. 10, the resource assignment unit 11 maybe configured to assign to the mobile station UE#1 a resource A specified by a sub-frame #n (time direction resource), SRS RBG#20-1 (frequency direction resource), and "k_{TC}=0 (frequency direction resource)", as the SRS transmission resource for transmitting the SRS that lies across the frequency bandwidth corresponding to 20 RB.

Alternately, the resource assignment unit 11 may be configured to assign a resource B specified by a sub-frame #n (time direction resource), SRS RBG#4-4 (frequency direction resource), and "k_{TC}=1 (frequency direction resource)", as the SRS transmission resource for transmitting the SRS that lies across the frequency bandwidth corresponding to 4 RB.

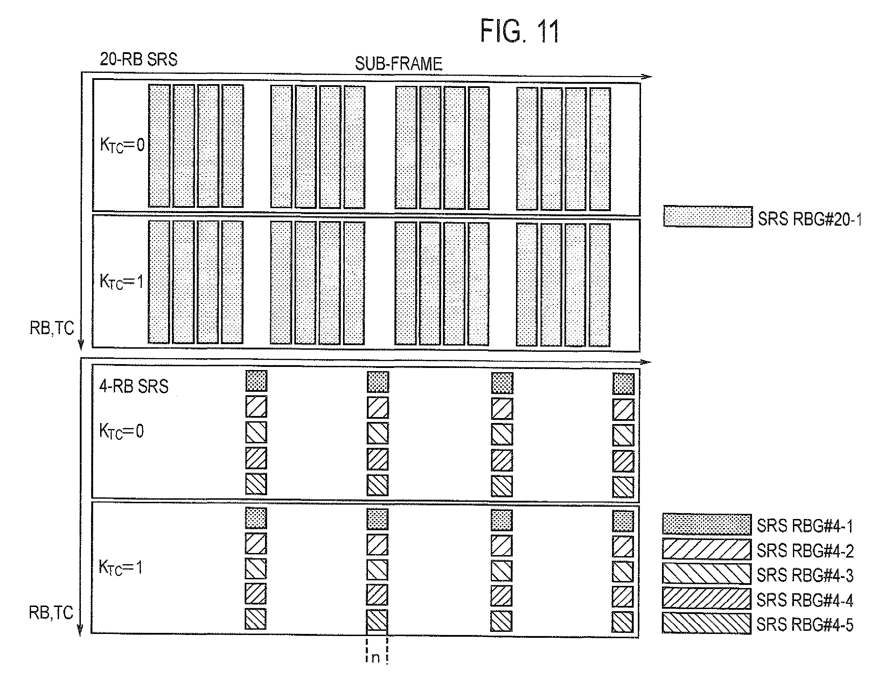

Further, as illustrated in Fig. 11, the resource assignment unit 11 may be configured to change the sub-frame that can be assigned as the SRS transmission resource for transmitting the SRS that lies across the frequency bandwidth corresponding to 20 RB and the sub-frame that can be assigned as the SRS transmission resource for transmitting the SRS that lies across the frequency bandwidth corresponding to 4 RB.

For example, as illustrated in Fig, 11, the resource assignment unit 11 may be configured to regard the sub-frame #n as a sub-frame that can be assigned only as the SRS transmission resource for transmitting the SRS that lies across the frequency bandwidth corresponding to 4 RB, and not to assign it as the SRS transmission resource for transmitting the SRS that lies across the frequency bandwidth corresponding to 20 RB.

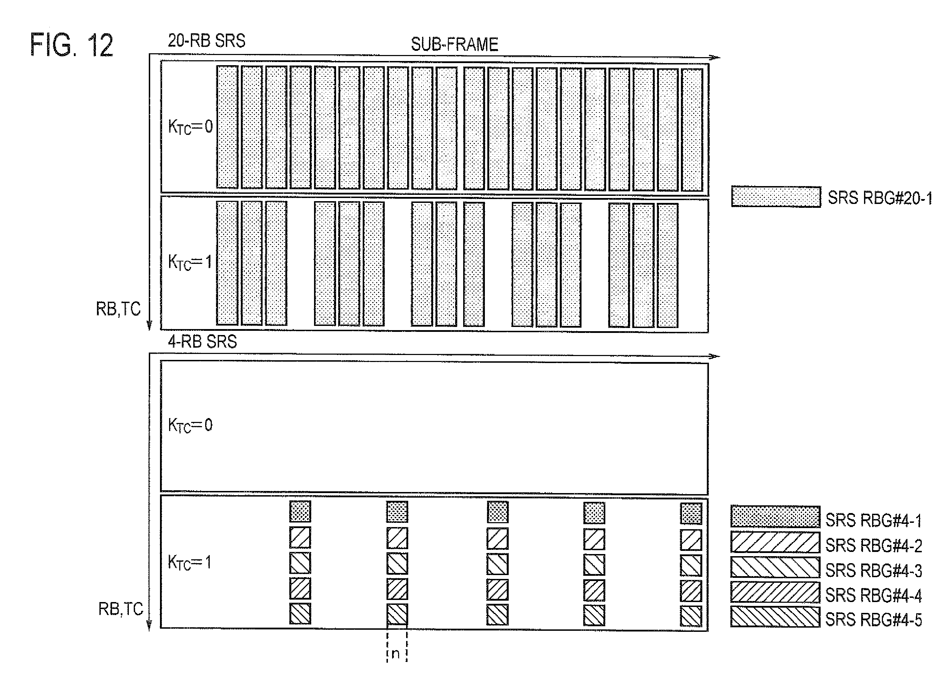

Further, as illustrated in Fig. 12, the resource assignment unit 11 may be configured to change a combination of "k_{TC}" and the sub-frame that can be assigned as the SRS transmission resource for transmitting the SRS that lies across the frequency bandwidth corresponding to 20 RB and a combination of "k_{TC}" and the sub-frame that can be assigned as the SRS transmission resource for transmitting the SRS that lies across the frequency bandwidth corresponding to 4 RB.

For example, as illustrated in Fig. 12, the resource assignment unit 11 may be configured to regard the sub-frame #n and the resource specified by "k_{TC}=1" as the sub-frame that can be assigned only as the SRS transmission resource for transmitting the SRS that lies across the frequency bandwidth corresponding to 4 RB, and not to assign it as the SRS transmission resource for transmitting the SRS that lies across the frequency bandwidth corresponding to 20 RB.

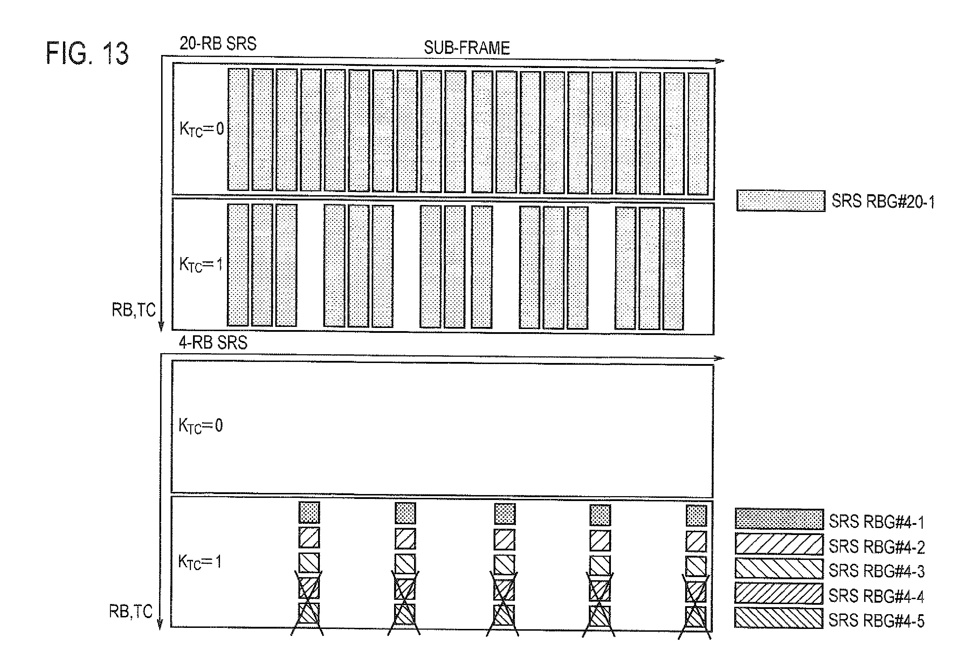

Further, as illustrated in Fig. 13, in the combination of "k_{TC}" and the sub-frame that can be assigned as the SRS transmission resource for transmitting the SRS that lies across the frequency bandwidth corresponding to 4 RB, the resource assignment unit 11 may limit the assignable SRS RBG.

For example, as illustrated in Fig. 13, the resource assignment unit 11 may be configured not to assign the SRS RBG#4-4 and #4-5, in the resource specified by the sub-frame #n and "k_{TC}=1" that is the resource that can be assigned only as the SRS transmission resource for transmitting the SRS that lies across the frequency bandwidth corresponding to 4 RB.

Further, the configuration may be such that the SRS transmission resource is not assigned in a sub-frame in which the PUCCH transmission resource is assigned to the mobile station UE and a sub-frame in which there is a possibility that another mobile station UE transmits PRACH.

### (Operation of mobile communication system according to first embodiment of the present invention)

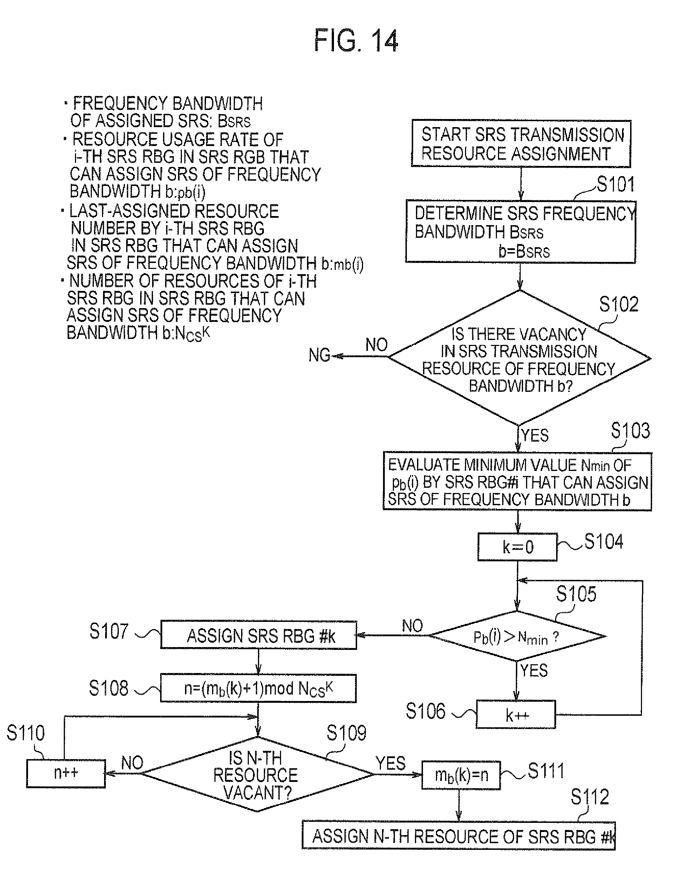

With reference to Fig. 14, the operation of the mobile communication system according to this embodiment, specifically, an operation in which the radio base station eNB according to this embodiment assigns the SRS transmission resource will be explained.

As illustrated in Fig. 14, in step S101, the radio base station eNB determines a frequency bandwidth B_{SRS} required for transmitting the SRS, and inputs it into a parameter b.

In step S102, the radio base station eNB determines whether or not there is a vacancy in the resource within the frequency band corresponding to the frequency bandwidth (for example, the time direction resource, the frequency direction resource, and the code direction resource that can be assigned as the SRS transmission resource for transmitting the SRS that lies across the frequency bandwidth corresponding to 20 RB).

When determining that there is the vacancy in the resource, the radio base station eNB proceeds to a process in step S103; when determining that there is not the vacancy in the resource, the radio base station eNB fails to assign the SRS transmission resource.

In step S103, the radio base station eNB evaluates a minimum value Nₘᵢₙ of a resource usage rate p_{b}(i) within SRS RBG#I that can be assigned as the SRS transmission resource.

The radio base station eNB sets "k=0" in step S104 and determines whether or not "p_{b}(i)>Nₘᵢₙ" is established in step S105.

When determining that "p_{b}(i)>Nₘᵢₙ" is established, in step S106, the radio base station eNB increments "k" by one until a total of the assignable SRS RBGs is exceeded, and then, returns to the operation in step S105.

On the other hand, when determining that "p_{b}(i)>Nₘᵢₙ" is not established, the radio base station eNB assigns the SRS RBG#k as the SRS transmission resource in step S107, and calculates "n" according to "n = (m_{b}(k)+1) mod N_{CS}k" in step S108.

In this case, m_{b}(i) denotes the number of SRS transmission resources assigned last time within an i-th SRS RBG, and N_{CS}ⁱ denotes the number of all the SRS transmission resources that can be used within the i-th SRS RBG.

In step S109, the radio base station eNB determines whether or not an n-th resource (CS) within the SRS RBG#k can be used.

When determining that the n-th resource (CS) within the SRS RBG#k can be used, the radio base station eNB sets "m_{b}(k)=n" in step S111, and assigns the n-th resource (CS) within the SRS RBG#k, as the SRS transmission resource, in step S112.

On the other hand, when determining that the n-th resource (CS) within the SRS RBG#k can not be used, the radio base station eNB increments "n" by one in step S110, and repeats the operation in step S109.

### (Operation and Effect of the mobile communication system according to the first embodiment of the present invention)

According to the mobile communication system based on the first embodiment of the present invention, the configuration is such that in the radio base station eNB, CS assigned as the SRS transmission resource is determined after determining the sub-frame assigned as the SRS transmission resource, SRS RBG, and "k_{TC}", and thus, if the number of CSs assigned as the SRS transmission resource within the resource specified by the same SRB RBG and "k_{TC}" is decreased, then it is possible to inhibit the influence of the interference.

The above-mentioned characteristics of the embodiment may be expressed as follows:

A first characteristic of this embodiment is a radio base station eNB that includes a resource assignment unit 11 configured to assign a time direction resource (sub-frame), a frequency direction resource, and a code direction resource, as an SRS transmission resource (physical signal transmission resource) used for transmitting SRS (predetermined physical signal) to each mobile station UE, in which the frequency direction resource is configured to be specified by a frequency region (SRS RBG) and a frequency position (k_{TC} in TC) within the frequency region.

In the first characteristic of this embodiment, when frequency bandwidths used in a plurality of SRSs transmitted by each mobile station UE are the same, the resource assignment unit 11 may be configured to assign the code direction resource (CS) after assigning the time direction resource and the frequency direction resource, as the SRS transmission resource, to each mobile station UE.

In the first characteristic of this embodiment, the resource assignment unit 11 may be configured to determine the frequency direction resource assigned as the SRS transmission resource, based on a usage situation of the code direction resource in each frequency direction resource.

In the first characteristic of this embodiment, the resource assignment unit 11 may be configured to assign as the SRS transmission resource in order from a frequency direction resource having a smaller number of code direction resources in use, within each time direction resource.

In the first characteristic of this embodiment, the resource assignment unit 11 may be configured to assign as the SRS transmission resource in order from a frequency direction resource having a larger number of code direction resources that can be used, within each time direction resource.

In the first characteristic of this embodiment, the resource assignment unit 11 may be configured to assign as the SRS transmission resource in order from a frequency direction resource having a smaller usage rate of the code direction resources, within each time direction resource.

In the first characteristic of this embodiment, the resource assignment unit 11 may be configured to regard a code direction resource that has lapsed a constant period after being released, as the code direction resource that can be used, in each frequency direction resource.

In the first characteristic of this embodiment, the resource assignment unit 11 may be configured to intermittently assign the code direction resource in each frequency direction resource.

In the first characteristic of this embodiment, the resource assignment unit 11 may be configured to deviate an assignment position of a code direction resource with which a specific index is imparted, from an assignment position of a code direction resource with which the specific index in another cell is imparted.

In the first characteristic of this embodiment, when frequency bandwidths used in a plurality of SRSs transmitted by each mobile station UE are different, the resource assignment unit 11 may be configured to change a sub-frame that can be assigned as an SRS transmission resource for transmitting SRS that lies across a first frequency bandwidth (for example, a frequency bandwidth corresponding to 20 RB) and a sub-frame that can be assigned as an SRS transmission resource for transmitting SRS that lies across a second frequency bandwidth (for example, a frequency bandwidth corresponding to 4 RB).

In the first characteristic of this embodiment, when frequency bandwidths used in a plurality of SRSs transmitted by each mobile station UE are different, the resource assignment unit 11 may be configured to change a combination of "k_{TC}" and a sub-frame that can be assigned as an SRS transmission resource for transmitting SRS that lies across a first frequency bandwidth (for example, a frequency bandwidth corresponding to 20 RB) and a combination of "k_{TC}" and a sub-frame that can be assigned as an SRS transmission resource for transmitting SRS that lies across a second frequency bandwidth (for example, a frequency bandwidth corresponding to 4 RB).

A second characteristic of this embodiment is a mobile communication method that includes a step of assigning a time direction resource, a frequency direction resource, and a code direction resource, as an SRS transmission resource used for transmitting SRS, to each mobile station UE, in which the frequency direction resource is specified by a frequency region and a frequency position within the frequency region.

Note that operation of the above described the radio base station eNB and the mobile station UE may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the radio base station eNB or the mobile station UE. Also, the storage medium and the processor may be provided in the radio base station eNB or the mobile station UE as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A radio base station, comprising a resource assignment unit configured to assign a time direction resource, a frequency direction resource, and a code direction resource, as a physical signal transmission resource for transmitting a predetermined physical signal, to each mobile station, wherein
the frequency direction resource is configured to be specified by a frequency region and a frequency position within the frequency region.

2. The radio base station according to claim 1, wherein
when frequency bandwidths used in a plurality of physical signals transmitted by each mobile station are the same, the resource assignment unit is configured to assign the code direction resource after assigning the time direction resource and the frequency direction resource, as the physical signal transmission resource, to each mobile station.

3. The radio base station according to claim 2, wherein
the resource assignment unit is configured to determine the frequency direction resource assigned as the physical signal transmission resource, based on a usage situation of the code direction resource in each frequency direction resource.

4. The radio base station according to claim 3, wherein
the resource assignment unit is configured to assign as the physical signal transmission resource in order from a frequency direction resource having a smaller number of code direction resources in use, within each time direction resource.

5. The radio base station according to claim 3, wherein
the resource assignment unit is configured to assign as the physical signal transmission resource in order from a frequency direction resource having a larger number of code direction resources that can be used, within each time direction resource.

6. The radio base station according to claim 3, wherein
the resource assignment unit is configured to assign as the physical signal transmission resource in order from a frequency direction resource having a smaller usage rate of the code direction resources, within each time direction resource.

7. The radio base station according to claim 4, wherein
the resource assignment unit is configured to regard a code direction resource that has lapsed a constant period after being released, as the code direction resource that can be used, in each frequency direction resource.

8. The radio base station according to claim 4, wherein
the resource assignment unit is configured to assign the code direction resource in a round-robin manner in a predetermined order, in each frequency direction resource.

9. The radio base station according to claim 2, wherein the resource assignment unit is configured to intermittently assign the code direction resource in each frequency direction resource.

10. The radio base station according to claim 2, wherein
the resource assignment unit is configured to deviate an assignment position of a code direction resource with which a specific index is imparted, from an assignment position of a code direction resource with which the specific index in another cell is imparted.

11. The radio base station according to claim 1, wherein
when frequency bandwidths used in a plurality of physical signals transmitted by each mobile station are different, the resource assignment unit may be configured to change a time direction resource that can be assigned as the physical signal transmission resource for transmitting the physical signal that lies across a first frequency bandwidth and a time direction resource that can be assigned as the physical signal transmission resource for transmitting the physical signal that lies across a second frequency bandwidth.

12. The radio base station according to claim 1, wherein
when frequency bandwidths used in a plurality of physical signals transmitted by each mobile station are different, the resource assignment unit may be configured to change a combination of a frequency position within a frequency band and a time direction resource that can be assigned as the physical signal transmission resource for transmitting the physical signal that lies across a first frequency bandwidth and a combination of a frequency position within a frequency band and a time direction resource that can be assigned as the physical signal transmission resource for transmitting the physical signal that lies across a second frequency bandwidth.

13. A mobile communication method comprising a step of assigning a time direction resource, a frequency direction resource, and a code direction resource, as a physical signal transmission resource for transmitting a predetermined physical signal, to each mobile station, wherein
the frequency direction resource is specified by a frequency region and a frequency position within the frequency region.
